# EUROPEAN PATENT APPLICATION

(11) **EP 4 455 863 A1**
(43) Date of publication of application: **30.10.2024**
(21) Application number: 22916221.9
(22) Date of filing: 23.03.2022
(51) Int. Cl.: G06F 8/65, G06F 8/61, G06F 9/54, G06F 9/448, G06F 9/4401, H04L 12/28, H04L 67/00

(54) **DEVICE AND METHOD FOR UPGRADING HOME APPLIANCE**

(30) Priority: 31.12.2021 KR 20210194577; 24.01.2022 KR 20220009647
(71) Applicant: LG Electronics Inc., Yeongdeungpo-gu Seoul 07336 (KR)
(72) Inventor: JUNG, In Sung, Seoul 08592 (KR); PARK, Ju Hyun, Seoul 08592 (KR); JEON, Chan Sung, Seoul 08592 (KR)
(74) Representative: Vossius & Partner Patentanwälte Rechtsanwälte mbB
(86) International application number: PCT/KR2022/004060
(87) International publication number: WO 2023/128060

(57) **Abstract**

The present disclosure relates to a home appliance and a method for upgrading software, a management server and a method for providing software, and a system therefor. To this end, the home appliance for upgrading software, according to one embodiment of the present disclosure, may comprise: a communication unit for communicating with a user terminal and a management server; a plurality of function control units for controlling each of the functions of the home appliance; and a main control unit electrically connected to the communication unit and the plurality of function control units. In addition, the main control unit can request, from the management server, software corresponding to each of the plurality of function control units through the communication unit, and store the software received from the management server in a storage unit. Therefore, the present disclosure allows the plurality of function control units for the home appliance to be upgraded all at once so that upgrade time can be reduced, and enables software to be prevented from being in a disabled operation state.

## Description

### [Technical Field]

. The present disclosure relates to a device and a method for upgrading a home appliance.

### [Background Art]

. Home appliances comprise a control unit. The control unit executes specific software to embody a function desired by the user.

. Ordinarily, in the case where firmware is upgraded to improve an error and the like of software, or a plurality of firmware is upgraded to a plurality of micoms, a conventional home appliance upgrades first software to a first micom, as the first software is downloaded successfully. Then in the case where the first software is upgraded successfully, second software for upgrading a second micom is down loaded. If the download of the second software fails because of an effect of a network environment (e.g., a wireless network environment), the home appliance notifies the user that the upgrade fails.

. Additionally, as the home appliance fails to upgrade the second software, the upgrade of the second micom to the N^{th} micom may not be completed. Further, the home appliance may not operate due to the non-completion of the upgrade.

. In the case where the conventional home appliance repeats a download procedure and an upgrade procedure, and a failure of the wireless network occurs, entire software may not be upgraded, causing a failure in the upgrade or an impossibility of the operation of the home appliance.

. Further, since the home appliance is rebooted to complete an upgrade of single firmware, the home appliance needs to be repeatedly rebooted a number of times.

. Thus, despite an unstable wireless network environment, the software of the home appliance needs to be upgraded reliably.

. Furthermore, a new function for upgrading the home appliance is not added after the home appliance is launched, causing a failure in meeting the needs and a consumer and a failure in responding to a technical change.

### [Description of the Invention]

### [Technical Problems]

. Conventionally, a download of software of a home appliance, and an upgrade of downloaded software are repeated, resulting in a failure in the upgrade of entire software.

. In the present disclosure, provided are a system and a method for upgrading software, in which software is downloaded consecutively, and then the home appliance is upgraded.

. In the present disclosure, provided are a home appliance and a method in which software is downloaded consecutively from a management server, and then at least one function control unit is upgraded.

. In the present disclosure, provided are a management server and a method in which software is transmitted consecutively to a home appliance.

. In the present disclosure, provided are a user terminal and a method in which an instruction to download and upgrade software is transmitted to a management server, based on a request of the user.

. Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solutions]

. A home appliance according to the present disclosure may comprise a communication unit configured to download software consecutively, and a control unit configured to upgrade the home appliance with the software downloaded.

. Additionally, in the case where the home appliance requests software corresponding to each of a plurality of function control units from a management server, stores the software received from the management sever in a storage unit, and receives the software completely, the home appliance may upgrade each of the plurality of function control units with corresponding software and be upgraded.

. Further, the home appliance may identify the plurality of function control units, and request the management server to transmit software in relation to each of the plurality of function control units identified consecutively.

. Further, in the case where the home appliance consecutively receives the software in relation to each of the plurality of function control units completely, the home appliance may upgrade each of the plurality of function control units with corresponding software consecutively, software may be upgraded consecutively such that each of the plurality of function control units is upgraded, and the home appliance may transmit a notification of upgrade completion to the management server.

. Further, in the case where the home appliance upgrades a first function control unit with first software such that the first software is upgraded completely, the home appliance may perform an upgrade process of upgrading a second function control unit with second software.

. Further, in the case where software is being downloaded, the home appliance may transmit information on a download rate of the software to at least one of the management server and the function control unit.

. Further, in the case where the management server receives s request to initiate a download of software of the home appliance, the management server may transmit the request to the home appliance, and in the case where the management server receives a request to download software in relation to each of the plurality of function control units from the home appliance, the management server may transmit software corresponding to each of the plurality of function control units to the home appliance consecutively.

. Further, in the case where the software corresponding to each of the plurality of function control units is transmitted completely, and the management server receives a notification of download completion of entire software from the home appliance, the management server may transmit the notification of download completion of entire software to a user terminal.

. Further, in the case where the management server receives a request for first software in relation to a first function control unit among the plurality of function control units, the management server may transmit the first software to the home appliance, and in the case where the management server receives a request for second software in relation to a second function control unit after the first software is transmitted completely, the management server may transmit the second software to the home appliance.

. Furthermore, in the case where the management server receives a request to initiate an upgrade from the user terminal after the entire software is transmitted to the home appliance completely, the management server may transmit the request to the home appliance such that the home appliance is upgraded with the software.

### [Advantageous Effects]

. According to the present disclosure, software corresponding to each of the plurality of function control units is requested from the management server, and the software received from the management server is stored in the storage unit, and in the case where the software is received completely, each of the plurality of function control units is upgraded with the corresponding software, such that the home appliance is upgraded. Thus, according to the present disclosure, the plurality of function control units of the home appliance may be upgraded collectively, leading to a decrease in upgrade time and preventing impossibility of driving of the software.

. According to the present disclosure, software is downloaded and upgraded collectively, leading to completion or impossibility (all or nothing) in the upgrade of entire software.

. According to the present disclosure, the management server is requested to consecutively transmit software in relation to each of the plurality of function control units, leading to avoidance of a failure in the firmware upgrade on the air (FOTA) of various types of software.

. According to the present disclosure, in the case where the software in relation to each of the plurality of function control units is consecutively received completely, an upgrade operation of consecutively upgrading each of the plurality of function control units with the software corresponding to each of the plurality of function control units may be performed. Thus, according to the present disclosure, despite a unstable wireless network environment, the software of the home appliance may be upgraded reliably.

. According to the present disclosure, in the case where the software in relation to each of the plurality of function control units is upgraded consecutively and then the plurality of function control units is upgraded completely, a notification of upgrade completion of the plurality of function control units may be transmitted to the management server. Thus, according to the present disclosure, the management server may maintain and manage the state of each home appliance.

. According to the present disclosure, in the case where the first function control unit of the home appliance is upgraded with the first software and then the first software is upgraded completely, the second function control unit of the home appliance may be upgraded with the second software. Thus, according to the present disclosure, a download and an upgrade do not need to be repeated, and the process of rebooting the home appliance may be omitted, leading to a decrease in the upgrade time.

. According to the present disclosure, in the case where software is being downloaded, information on a download rate of the software may be transmitted to at least one of the management server and the function control unit. Thus, the management server and the function control unit may identify the download rate of the software.

. According to the present disclosure, a request to initiate a download of software of the home appliance may be transmitted to the home appliance, and in the case where a request to download software in relation to each of the plurality of function control units is received from the home appliance, the software corresponding to each of the plurality of function control units may be transmitted to the home appliance consecutively. Thus, according to the present disclosure, despite an unstable wireless network environment, the corresponding software may only be transmitted effectively.

. According to the present disclosure, in the case where the software corresponding to each of the plurality of function control units is transmitted completely and a notification of download completion of entire software is received from the home appliance, the notification of download completion of entire software may be transmitted to the user terminal. Thus, according to the present disclosure, the user may check a situation of the upgrade of the home appliance in real time.

. According to the present disclosure, in the case where the first software in relation to the first function control unit among the plurality of function control units is transmitted to the home appliance, and after the first software is transmitted completely, and a request for the second software in relation to the second function control unit among the plurality of function control units is received, the second software in relation to the second function control unit may be transmitted to the home appliance consecutively. Thus, according to the present disclosure, despite an unstable wireless network environment, FOTA may be performed in relation to various types of software.

. According to the present disclosure, in the case where a request to initiate an upgrade of the home appliance is received from the user terminal, the request to initiate an upgrade may be transmitted to the home appliance, and in the case where state information is received from the home appliance based on the transmitted request to initiate an upgrade, the state of the home appliance may be upgraded based on the state information. Thus, the management server may maintain and manage the state of each home appliance.

. According to the present disclosure, in the case where a notification of upgrade completion of entire software is received from the home appliance completely based on the transmission of the software corresponding to each of the plurality of function control units of the home appliance, the notification may be transmitted to the user terminal. Thus, the user may check a situation of the upgrade of the home appliance in real time.

. Specific effects are described along with the above-described effects in the section of detailed description.

### [Brief Description of the Drawings]

FIG. 1 is a block diagram showing a schematic configuration of a system 1 upgrading a home appliance in one embodiment.
FIG. 2 is a block diagram showing a schematic configuration of a home appliance in one embodiment.
FIG. 3 is a block diagram showing a schematic configuration of a user terminal in one embodiment.
FIG. 4 is a block diagram showing a schematic configuration of a management server in one embodiment.
FIG. 5a is a view showing the flow of a method for upgrading a home appliance in one embodiment.
FIG. 5b is a view showing the flow of a method for upgrading a home appliance in another embodiment.
FIG. 6 is a flowchart showing operations of a system upgrading software of a home appliance in one embodiment.
FIG. 7 is a flowchart showing a process in which a user terminal requests an upgrade of a home appliance in one embodiment.
FIG. 8(a) is an exemplary view showing that a user terminal displays a pop-up indicating that an upgrade of a home appliance is ready in one embodiment.
FIG. 8(b) is an exemplary view showing a user terminal displays a screen in relation to an upgrade of a home appliance in one embodiment.
FIG. 8(c) is an exemplary view showing a user terminal displays a screen receiving an input in relation to an upgrade of a home appliance in one embodiment.
FIG. 9 is a flowchart showing a process in which a management server upgrading a home appliance operates in one embodiment.
FIG. 10 is a flowchart showing a process in which a home appliance upgrading software operates in one embodiment.
FIG. 11 is an exemplary view showing a schematic communication state among a home appliance, a management server and a user terminal in one embodiment.
FIG. 12 is a schematic view showing a system upgrading a home appliance in one embodiment.
FIG. 13 is a detailed block diagram showing a WiFi module in one embodiment.

### [Detailed Description of Exemplary Embodiments]

. The above-described aspects, features and advantages are specifically described hereafter with reference to accompanying drawings such that one having ordinary skill in the art to which the disclosure pertains can embody the technical spirit of the disclosure easily. In the disclosure, detailed description of known technologies in relation to the subject matter of the disclosure is omitted if it is deemed to make the gist of the disclosure unnecessarily vague. Hereinafter, preferred embodiments according to the disclosure are specifically described with reference to the accompanying drawings. In the drawings, identical reference numerals can denote identical or similar components.

. The terms "first", "second" and the like are used herein only to distinguish one component from another component. Thus, the components are not to be restricted by the terms. Certainly, a first component can be a second component, unless stated to the contrary.

. Hereinafter, when any one component is described as being "in the upper portion (or the lower portion) or "on (or under)" another component, any one component can be directly on (or under) another component, and an additional component can be interposed between the two components.

. When any one component is described as "connected", "coupled" or "connected" to another component, any one component can be directly connected or coupled to another component, but an additional component can be "interposed" between the two components or the two components can be "connected", "coupled" or "connected" by an additional component.

. Throughout the disclosure, each component can be provided a single one or a plurality of ones, unless stated to the contrary.

. In the disclosure, singular forms include plural forms as well, unless explicitly indicated otherwise. In the disclosure, the terms "comprise", "being comprised of' and the like do not imply necessarily including stated components or stated steps and imply excluding some of the stated components or stated steps or including additional components or additional steps.

. Throughout the disclosure, the terms "A and/or B" as used herein can denote A, B or A and B, and the terms "C to D" can denote C or greater and D or less, unless stated to the contrary.

. Hereinafter, a home appliance, a management server and a user terminal upgrading software, and a system therefor in several embodiments are described.

. In the present disclosure, an upgrade of a home appliance denotes an upgrade of software installed in the home appliance. The software may comprise firmware for operating a control unit (i.e., a micom) and a content program executed on the firmware. In an example, the content program may comprise a program for setting the background screen of the display unit of a washing machine, a program for setting an administration course of a washing machine and the like.

. Additionally, an upgrade process is defined as comprising a download procedure and an upgrade procedure. The download procedure involves receiving software data for writing software by the home appliance and storing the same in the home appliance. The upgrade procedure involves writing the software data stored in the home appliance to a control unit or a micom.

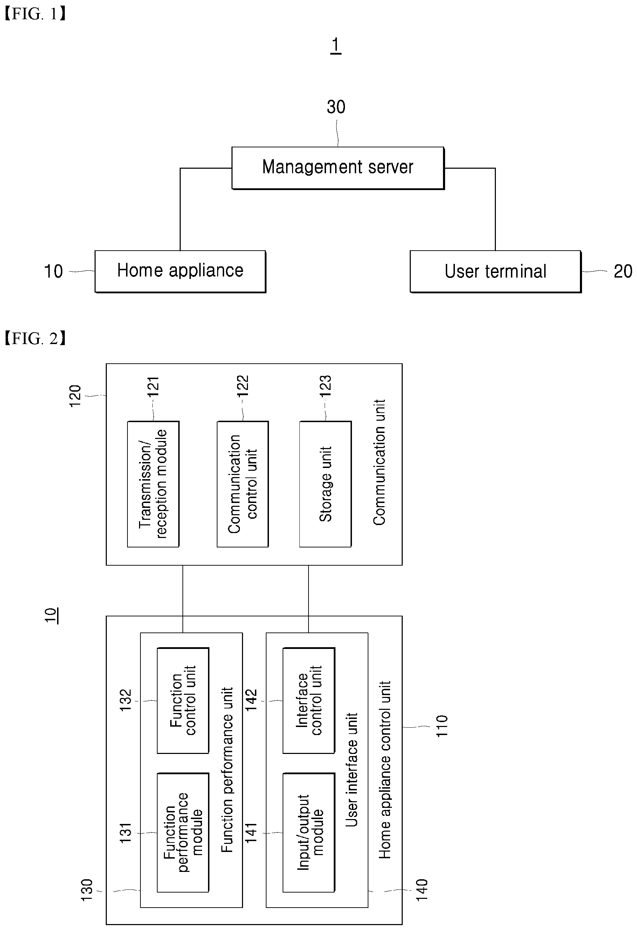

. FIG. 1 is a block diagram showing a schematic configuration of a system upgrading a home appliance in one embodiment.

. Referring to FIG. 1, the system 1 (hereinafter, "system") upgrading a home appliance may comprise at least one home appliance 10, a user terminal 20 and a management server 30.

. In one embodiment, the home appliance 10 may comprise an electronic product that is installed in a space inhabited by the user, and performs its unique function. In an example, the home appliance 10 may comprise a refrigerator, a TV, a washing machine, a dryer, an air conditioner, an air purifier, a medical device, a microwave oven, an electric range, an oven and the like.

. In one embodiment, the user terminal 20 may be a device possessed by the user. In an example, the user terminal 20 as a device communicating information with the home appliance 10 through a server to perform an upgrade may comprise a smartphone, a smart watch, a laptop, a tablet PC, or a home hub for a household or an artificial intelligence (AI) speaker as a separate product. Additionally, the user terminal 20 may comprise a smart TV, a refrigerator, a TV and the like having the function of communicating information with the home appliance.

. In one embodiment, the management server 30 may be a device that manages the home appliance 10 remotely. The management server 30 may have a communication connection with the home appliance 10 through a communication network. Additionally, the management server 30 may also have a communication connection with the user terminal 20, and manage the home appliance 10 in linkage with the user terminal 20.

. In one embodiment, the management server 30 may store information (e.g., software, firmware) for upgrading the home appliance 10. The information stored in the management server 30 may comprise software installed in the home appliance 10, information on the home appliance 10, and information on the user and the like. The software may comprise at least a portion of data on firmware of the home appliance (i.e. firmware data) and data on a content program executed on the firmware (i.e., content program data).

. Hereinafter, the configurations of the home appliance 10, the user terminal 20 and the management server 30 are described specifically, with reference to FIGS. 2 to 4.

. FIG. 2 is a block diagram showing a schematic configuration of the home appliance in one embodiment.

. Referring to FIG. 2, at least one home appliance 10 may comprise a home appliance control unit 110 and a communication unit 120. The home appliance control unit 110 may comprise a function performance unit 130 and a user interface unit 140. The function performance unit 130 may comprise a function performance module 131 and a function control unit. 132. The user interface unit 140 may comprise an input/output module 141 and an interface control unit 142.

. Additionally, the communication unit 120 may comprise a transmission/reception module 121, a communication control unit 122 and a storage unit 123.

. Further, the configuration of the home appliance 10 may not be limited to that of FIG. 2, and a variety of additional components may be included in the home appliance 10.

. In one embodiment, the home appliance control unit 110, the communication unit 120, the function performance unit 130 and the user interface unit 140 may transmit and receive data mutually through a local bus.

. In one embodiment, the home appliance control unit 110 may control an entire operation of the home appliance 10. Additionally, the home appliance control unit 110 may correspond to a main micom. The home appliance control unit 110 may operate based on main firmware.

. Though not illustrated in the drawing, the home appliance control unit 110 may comprise a processor (not illustrated) and an internal memory (not illustrated).

. In one embodiment, the processor may comprise one or more of a central processing unit (CPU), an application processor or a communication processor. The processor may operate based on firmware to execute one or more of instructions in relation to the control of the home appliance 10.

. In one embodiment, the internal memory may be a volatile and/or non-volatile memory. The internal memory may store firmware and store one or more of instructions in relation to the control of the home appliance 10.

. In one embodiment, the communication unit 120 may perform communication with the management server 30 through the transmission/reception module 121.

. In one embodiment, the transmission/reception module 121 of the communication unit 120 may receive software such as firmware data and content program data from the management server 30, and the storage unit 123 of the communication unit 120 may store the software received. Additionally, the communication control unit 122 of the communication unit 120 may transmit the software data stored in the storage unit 123 to at least one of the function performance unit 130 and the user interface unit 140. The communication control unit 122 may also be referred as a control unit. Further, the management server 30 may also be referred to as a server.

. In one embodiment, the transmission/reception module 121 may transmit and receive data. The transmission/reception module 121 may transmit and receive data based on a wired and/or wireless method.

. In one embodiment, the transmission/reception module 121 may comprise a short-distance wireless communication module embodying short-distance wireless communication. The short-distance wireless communication module may comprise a wireless communication module based on Wireless Fidelity (Wi-Fi), Bluetooth, radio frequency identification (RFID), infrared data association (IrDA), ultra-wideband (UWB), ZigBee and the like.

. For example, in the case where the transmission/reception module 121 is a short-distance wireless communication module, an access point (AP; not illustrated) may be provided in the user's residential space. The access point may be a device that relays wireless communication between the management server 30 and the transmission/reception module 121. In the case where the transmission/reception module 121 is a WiFi module, the access point may be a WiFi router.

. In another embodiment, the transmission/reception module 121 may be a long-distance wireless communication module embodying long-distance wireless communication. The long-distance wireless communication module may be a wireless communication module based on code division multiple access (CDMA), frequency division multiple access (FDMA), time division multiple access (TDMA), orthogonal frequency division multiple access (OFDMA), single carrier frequency division multiple access (SCFDMA), 5 generation (5G) and the like.

. In one embodiment, the communication control unit 122 may control the transmission/reception module 121 and the storage unit 123. The communication control unit 122 may correspond to a micom for controlling communication. The communication control unit 122 may operate based on firmware.

. In one embodiment, the communication control unit 122 may store data received from the transmission/reception module 121, in particular, software data in the storage unit 123. Additionally, the communication control unit 122 may transmit the software data stored in the storage unit 123 to the function performance unit 130 of the home appliance control unit 110 or the user interface unit 140 through a local bus. The function control unit 132 of the function performance unit 130, and the interface control unit 142 of the user interface unit 140 may be referred to as a function control unit.

. In this embodiment, the storage unit 123 (e.g., a memory) for a download may be provided at the communication unit 120, but may be provided at the control unit 10 or provided in a partial area of the memory of the control unit. Additionally, downloaded software may be transmitted and written to the memory of the home appliance control unit based on serial communication, and an existing control program may be updated or added to upgrade the home appliance. In the case where the home appliance has the memory of the control unit in which a download area is allocated, the home appliance may complete the download area and perform rebooting and then allocate the download area to a control area, to upgrade the home appliance with new software.

. Though not illustrated, the communication control unit 122 may comprise a processor and an internal memory. The processor and the internal memory are described above.

. In one embodiment, the storage unit 123 may be a volatile/non-volatile memory, and store software data received from the transmission/reception module 121.

. In one embodiment, the function performance unit 130 may be a component that performs a unique function provided by the home appliance 10. In an example, the unique function may be a washing function of a washing machine, a drying function of a dryer, an air conditioning function of an air conditioner, an air purifying function of an air purifier and the like.

. In one embodiment, the function performance unit 130 may comprise a function performance module 131 and a function control unit 132.

. The function performance module 131 may be a module that performs the above-described functions, and comprise a driving unit comprising a motor, a heating unit, a cooling unit and the like.

. In one embodiment, the function control unit 132 may control the function performance module 131. The function control unit 132 may correspond to a micom for controlling function performance. The function control unit 132 may operate based on firmware.

. Though not illustrated in the drawing, the function control unit 132 may comprise a processor and an internal memory. The processor and the internal memory are described above.

. In one embodiment, the user interface unit 140 may provide information on the operation of the home appliance 10, information on the upgrade of the home appliance 10 and the like to the user. In an example, the user interface unit 140 may comprise a display module and a speaker module. Additionally, the user interface unit 140 may receive an input that controls the operation of the home appliance 10 from the user.

. The user interface unit 140 may comprise an input/output module 141 and an interface control unit 142.

. In one embodiment, the input/output module 141 may output information on the operation of the home appliance 10, and information on the upgrade of the home appliance 10 visually and/or acoustically to the user, and receive input information. In the case where the input/output module 141 is a display module, the input/output module 141 may be a display panel.

. In one embodiment, the interface control unit 142 may control the input/output module 141. The interface control unit 142 may correspond to a micom for controlling an interface. The interface control unit 142 may operate based on firmware.

. Though not illustrated in the drawing, the interface control unit 142 may comprise a processor and an internal memory. The processor and the internal memory are described above.

. Further, the main firmware, the firmware of the communication control unit 122, the firmware of the function control unit 132 and the firmware of the interface control unit 142 may differ from one another.

. Further, in FIG. 2, the function control unit 132 and the interface control unit 142 are illustrated, but provided as an example, and the home appliance in the present disclosure may comprise at least one function control unit depending on the sort, model and the like of the home appliance.

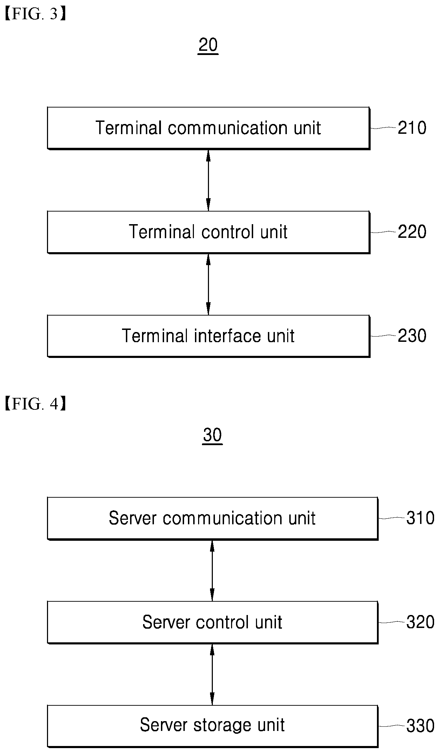

. FIG. 3 is a block diagram showing a schematic configuration of a user terminal in one embodiment.

. Referring to FIG. 3, the user terminal 20 may comprise a terminal communication unit 210, a terminal control unit 220 and a terminal interface unit 230.

. In one embodiment, the terminal communication unit 210 may perform communication with the management server 30. The terminal communication unit 210 may perform communication based on a wired and/or wireless method. The wireless method may comprise a short-distance wireless communication method and a long-distance wireless communication method.

. The terminal control unit 220 may control the terminal communication unit 210 and the terminal interface unit 230.

. Though not illustrated, the terminal control unit 220 may comprise a processor and an internal memory. The internal memory may store an application for a terminal for managing the home appliance 10. The processor may execute the application for a terminal.

. In one embodiment, the terminal interface unit 230 may output a screen of the execution of the application for a terminal. For example, the terminal interface unit 230 may output information on the upgrade of the home appliance 10 visually and/or acoustically.

. FIG. 4 is a block diagram showing a schematic configuration of a management server in one embodiment.

. Referring to FIG. 4, the management server 30 may comprise a server communication unit 310, a server control unit 320 and a server storage unit 333.

. In one embodiment, the server communication unit 310 may perform communication with the home appliance 10 and the user terminal 20. The server communication unit 310 may perform communication based on a wired and/or wireless method. The wireless method may comprise a short-distance wireless communication method and a long-distance wireless communication method.

. In one embodiment, the server control unit 320 may control the server communication unit 310 and the server storage unit 330.

. Though not illustrated in the drawing, the server control unit 320 may comprise a processor and an internal memory. The internal memory may store an application for a server for managing the home appliance 10. The processor may execute the application for a server.

. In one embodiment, the server storage unit 330 may be a volatile and/or non-volatile memory, and store information on the upgrade of the home appliance 10. The information on the upgrade may comprise software data installed in the home appliance, information on the home appliance 10, and information on the user and the like. Additionally, the software data may comprise the firmware data of the home appliance and content program data.

. Further, the firmware data and the content program data may be respectively stored in the server storage unit 330, based on each version. In particular, for an upgrade of software, the latest versions of the firmware data and the content program data may be respectively stored in the server storage unit 330.

. Further, the home appliance 10, as described above, may comprise a plurality of control units (micoms) 110, 122, 132, 142, and firmware of each of the plurality of control units may differ from one another. The server storage unit 330 may store firmware data of each of the plurality of control units 110, 122, 132, 142.

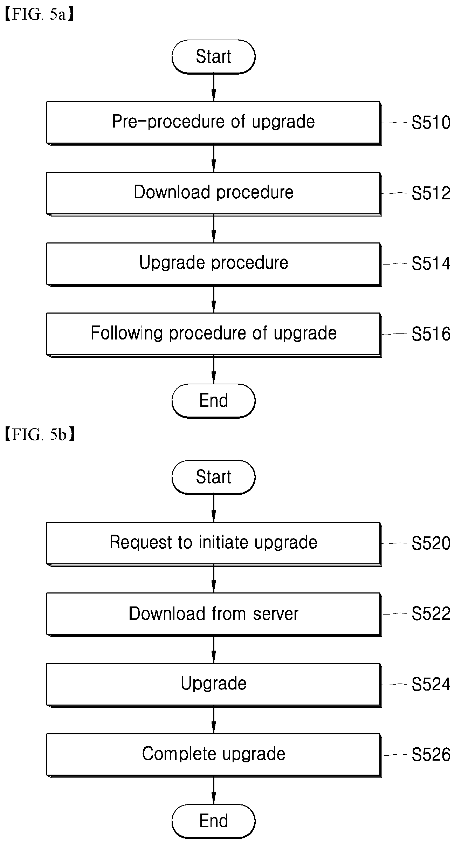

. Hereinafter, a process of upgrading software, performed by a system 1, is described with reference to FIGS. 5a and 5b.

. FIG. 5a is a view showing the flow of a method for upgrading a home appliance in one embodiment.

. The upgrade method may be performed with respect to each of the plurality of home appliances 10 possessed by the user, and for convenience of description, a method for upgrading software of one home appliance 10 is described with reference to FIG. 5a.

. The method for upgrading software may be performed in such a way that the above-described home appliance 10, user terminal 20 and management server 30 are linked with one another.

. Hereinafter, a procedure in each step is described.

. In S510, a pre-procedure of an upgrade may be performed.

. In S510, the home appliance 10 and the management server 30 may have a communication connection with each other, and information on an upgrade may be stored in the server storage unit 330, and an upgrade schedule comprising an upgrade cycle, an upgrade reservation and the like may be set.

. In S512 and S514, an upgrade process may be performed.

. In S512, a download procedure in the upgrade process may be performed.

. Specifically, the management server 30 may transmit software data to the home appliance 10. The software data transmitted from the management server 30 may be received by the communication unit 120 of the home appliance 10 and then stored. Additionally, as described above, the software data transmitted may be firmware data or content program data.

. The software data may comprise two or more firmware data, and the management server 30 may transmit two or more firmware data to the home appliance 10 consecutively. For example, in the case where two or more control units are upgraded among the plurality of control units 122, 132, 142 included in the home appliance 10, the management server 30 may transmit two or more firmware data corresponding to two or more control units to the home appliance 10 consecutively. The order of transmitting two or more firmware data may be set in advance. In an example, in the case where the function control unit 132 and the interface control unit 142 are upgraded, firmware data in relation to the function performance control unit 132 may be transmitted, and then firmware data in relation to the interface control unit 142 may be transmitted.

. Alternatively, the software data may comprise two or more content program data, and the management server 30 may consecutively transmit the two or more content program data to the home appliance 10. Each of the two or more content program data may be data on a content program that is executed by at least one control unit among the plurality of control units 110, 122, 132, 142 included in the home appliance 10. The order of transmitting two or more content program data may be set in advance.

. Alternatively, the software data may comprise at least one firmware data and at least one content program data. At this time, the management server 30 may transmit at least one firmware data and at least one content program data consecutively.

. Then in S514, an upgrade procedure in the upgrade process may be performed.

. Specifically, the communication unit 120 may write the stored software data to a corresponding control unit among the plurality of control units 110, 122, 132, 142. As the software data is written to the control unit, software may be installed in the control unit.

. In the case where the plurality of software data stored in the communication unit 120 comprises two or more firmware data, the communication unit 120 may write each of the two or more firmware data to a corresponding function control unit. The order of writing two or more firmware data may be set in advance. In an example, in the case where the function control unit 132 and the interface control unit 142 are upgraded, firmware data in relation to the function control unit 132 may be written and then firmware data in relation to the interface control unit 142 may be written.

. Alternatively, in the case where the plurality of software data stored in the communication unit 120 comprises two or more content program data, the communication unit may write the two or more content program data to a corresponding control unit. The order of writing two or more content program data may be set in advance.

. Alternatively, in the case where the plurality of software data stored in the communication unit 120 comprises at least one firmware data and at least one content program data, the communication unit may write at least one firmware data and at least one content program data to corresponding control units. Additionally, the order of writing at least one firmware data and at least one content program data may be set in advance.

. In an example, in the case where the plurality of software data is firmware data and content program data in relation to the user interface unit, the firmware data may be written, and then the content program data may be written.

. In S516, a following procedure of the upgrade may be performed.

. In S516, a detailed function of the software ungraded may be set, for example. In particular, in the case where the plurality of software is upgraded completely, a detailed function of each of the plurality of software may be set consecutively.

. FIG. 5b is a view showing an upgrade process in another embodiment.

. In the case where upgrade particulars to be applied to the home appliance are newly registered with the management server, an upgrade may proceed after a selection and a download based on the flow of FIG. 5b. FIG. 5b shows an example of the initiation of a download based on the user's selection of an upgrade and the user's request for an upgrade before the download of software to the home appliance.

. In one embodiment, in the case where software such as a program, data and the like needed for an upgrade is registered with the management server 30, upgradable software may be checked through the user interface unit 140 of the home appliance 10 or the terminal interface unit 230 of the user terminal 20, and a list of upgradable software may be displayed.

. In one embodiment, in the case where the user selects one or more of the upgradable software through the user interface unit 140 of the home appliance 10 or the terminal interface unit 230 of the user terminal 20, the home appliance 10 or the user terminal 20 may request the management server 30 to initiate an upgrade (S520).

. In one embodiment, the home appliance 10, the home appliance 10 may download the selected software from the management server 30 (S522). In the case where the download is completed, the home appliance 10 may install/write the downloaded software in the home appliance control unit to proceed with an upgrade (S524).

. In one embodiment, in the case where the upgrade is completed (S526), the home appliance 10 may perform rebooting. Additionally, the user interface unit 140 of the home appliance 10 or the terminal interface unit 230 of the user terminal 20 may notify or display an upgraded function.

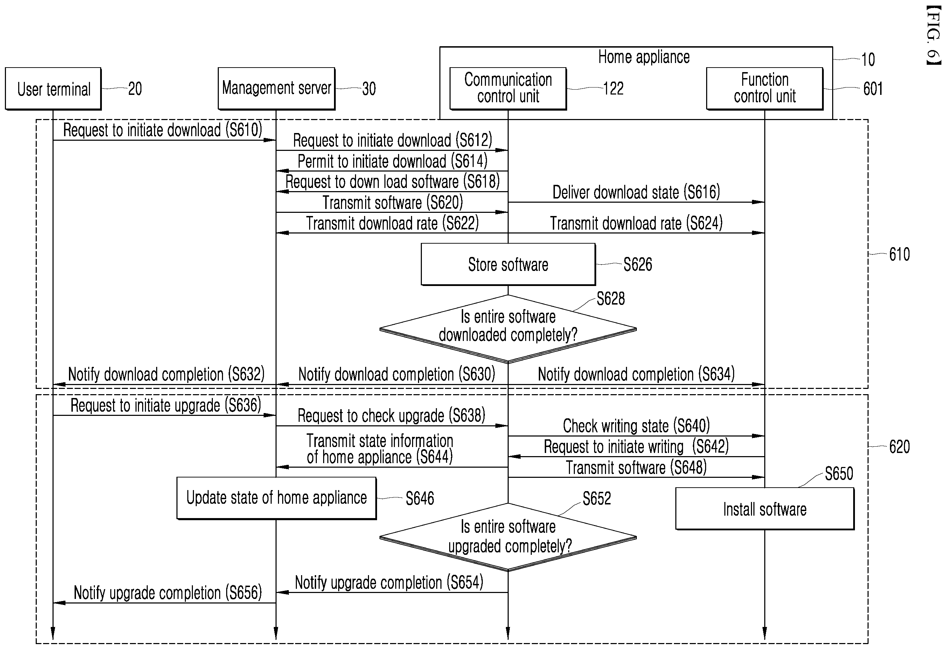

. FIG. 6 is a flowchart showing operations of a system upgrading software of a home appliance in one embodiment.

. Hereinafter, the operations of the system upgrading software of a home appliance in one embodiment are specifically described with reference to FIG. 6.

. The system upgrading software of a home appliance may perform a download procedure 610 in which the home appliance 10 requests software from the management server 30 and download corresponding software, and an upgrade procedure 620 in which the home appliance 10 upgrades software upgrades software in relation to at least one function control unit 601 to a corresponding function control unit.

. Additionally, the upgrade process of the home appliance may comprise the download procedure 610 and the upgrade procedure 620. The function control unit 601 may be included in the home appliance 10, and operate a function based on the sort or model of the home appliance 10. Further, FIG 6 shows one function control unit 601, but the function control unit 601 in FIG. 6 may comprise at least one of the function control unit 132 and the interface control unit 142.

. Further, the function control unit 601 in FIG. 6 may comprise at least one function control unit apart from the function control unit 132 and the interface control unit 142.

. In one embodiment, the user terminal 20 may request the management server 30 to initiate a download of software in relation to at least one function control unit 601 of the home appliance 10 (S610). Having executed an application (e.g., an LG ThinQ application) and, having received an instruction (i.e., a user input to request initiation of a download of software onto at least one function control unit 601 (e.g., the function control unit 132 and/or the interface control unit 142) of the home appliance 10) input through the executed application, the user terminal 20 may transmit the received instruction to the management server 30 through the application. For example, the user terminal 20 may transmit a request to download of software selected by the user to the management server 30.

. For example, the home appliance 10 may comprise a plurality of function control units, and each of the function control units may perform a function corresponding to written firmware.

. In one embodiment, the management server 30 may transmit a request to initiate a download to the home appliance 10 (e.g., the communication control unit 122) (S612). The management server 30 may transmit the request to initiate a download transmitted through the application (e.g., the LG ThinQ application) of the user terminal 20 to a corresponding home appliance 10 (e.g.,the communication control unit 122).

. In one embodiment, the home appliance 10 (e.g., the communication control unit 122) may transmit permission of the initiation of a download to the management server 30 (S614). The home appliance 10 (e.g., the communication control unit 122) may transmit a signal for permitting a download of software onto at least one function control unit 601 to the management server 30.

. In one embodiment, the home appliance 10 (e.g., the communication control unit 122) may transmit a download state to the home appliance 10 (e.g., the function control unit 601) (S616). The home appliance 10 (e.g., the communication control unit 122) may notify the function control unit 601 that a download of software onto the function control unit 601 is to be initiated, through a protocol. For example, the communication control unit 122 (or the home appliance control unit 110) may determine an upgrade state (e.g., a firmware version and the like) of at least one function control unit included in the home appliance 10.

. For example, the protocol may be a protocol exclusive for a request for software and a response to the request between the communication control unit 122 and the function control unit 601.

. In one embodiment, the home appliance 10 (e.g., the communication control unit 122) may request software from the management server 30 (S618). The home appliance 10 (e.g., the communication control unit 122) may request software corresponding to the function control unit in the home appliance 10 from the management server 30. The home appliance 10 (e.g., the communication control unit 122) may transmit a request comprising information (e.g., firmware version information) on the function control unit in the home appliance 10 to the management server 30.

. In one embodiment, the management server 30 may transmit software to the home appliance 10 (e.g., the communication control unit 122) (S620). The management server 30 may transmit an updated version of software (e.g., first software in relation to a first function control unit) more recent than a current version of software of the function control unit 601 in the home appliance 10 to the home appliance 10 (e.g., the main control unit 110).

. For example, in the case where a seamless transmission of software fails temporarily as a result of an unstable communication channel, the communication control unit 122 identify a sequence of the frame of software received most recently, and then transmit the identified sequence to the management server 30, such that the management server 30 continues to transmit the frame of software.

. Accordingly, the communication control unit 122 may receive software in a seamless manner.

. In one embodiment, the home appliance 10 (e.g., the communication control unit 122) may transmit information on a rate of a download to the management server 30 (S622). The home appliance 10 (e.g., the communication control unit 122) may identify a download rate of software being transmitted by the management server 30, and transmit information on the identified rate (e.g., a download rate) to the management server 30 in real time.

. In one embodiment, the home appliance 10 (e.g., the communication control unit 122) may transmit the information on a download rate to the home appliance 10 (e.g., the function control unit 601) (S624). Further, the home appliance 10 (e.g., the communication control unit 122) may identify a download rate of software being transmitted by the management server 30, and may transmit information on the identified rate (e.g., a download rate) to the function control unit 601 in real time.

. In one embodiment, the home appliance 10 (e.g., the communication control unit 122) may store software (S626). For example, the communication control unit 122 may store software (e.g., first software in relation to a first function control unit) received from the management server 30 in the storage unit 123.

. In one embodiment, the home appliance 10 (e.g., the communication control unit 122) may identify whether entire software (e.g., N numbers of software in relation to N numbers of function control units) is downloaded completely (S628). In the case where software (e.g., first software) in relation to one function control unit (e.g., a first function control unit) is downloaded completely, the home appliance 10 (e.g., the communication control unit 122) may go back to S618 described above and request another software (e.g., second software) in relation to another function control unit (e.g., a second function control unit).

. For example, the communication control unit 122 repeats performing the above-described steps (S618, S620, S622, S624, S626, S628) for each software. Additionally, in the case where the performance of the above-described steps (S618, S620, S622, S624, S626, S628) is completed in relation to each of the plurality of function control units, the communication control unit 122 may identify whether entire software in relation to the plurality of function control units (i.e., all software in relation to each of the plurality of function control units) is downloaded completely.

. In one embodiment, the home appliance 10 (e.g., the communication control unit 122) may transmit a notification about the completion of the download to the management server 30 (S630). In the case where the entire software in relation to the plurality of function control units (i.e., all software in relation to each of the plurality of function control units) is downloaded completely, the communication control unit 122 may transmit a notification about the completion of the download to the management server 30.

. The notification about the completion of the download is transmitted after the entire software (i.e., all software in relation to each of the plurality of function control units) is downloaded completely.

. In one embodiment, the management server 30 may transmit the notification about the completion of the download to the user terminal 20 (S632). The management server 30 may transmit the notification received from the communication control unit 122 to the user terminal 20 (e.g., an LG ThinQ application).

. In one embodiment, the home appliance 10 (e.g., the communication control unit 122) may transmit a notification about the completion of the download to the function control unit 601 (S634). In the case where the entire software (i.e., all software in relation to each of the plurality of function control units) is downloaded completely, the home appliance 10 (e.g., the communication control unit 122) may transmit a notification about the completion of the download respectively to at least one function control unit corresponding to software.

. The above-described steps of S610 to S634 may be a download procedure 610 in which software is downloaded, and in which the user terminal 20 request a download of software in relation to at least one home appliance placed in the user's house, and the home appliance may receive the software transmitted from the management server 30 and store the software in the storage unit.

. In one embodiment, the user terminal 20 may request the management server 30 to initiate an upgrade of at least one function control unit 601 of the home appliance 10 (S636). Having received an instruction (i.e., a user input to request initiation of an upgrade of software in relation to at least one function control unit 601 (e.g., the function control unit 132 and/or the interface control unit 142) of the home appliance 10) input through an application (e.g., an LG ThinQ application), the user terminal 20 may transmit the received instruction to the management server 30 through the application.

. In one embodiment, the management server 30 may request the home appliance 10 (e.g., the communication control unit 122) to check an upgrade (S638). The management server 30 may transmit a request to initiate an upgrade, transmitted through an application (e.g., an LG ThinQ application) of the user terminal 20, to a corresponding home appliance 10 (e.g., the communication control unit 122). The request may comprise an inquiry as to whether the corresponding communication control unit 122 is upgradable.

. In one embodiment, the home appliance 10 (e.g., the communication control unit 122) may check a writing state in relation to the home appliance 10 (e.g., the function control unit 601) (S640). The home appliance 10 (e.g., the communication control unit 122) may check whether an upgrade of a corresponding function control unit 601 is possible. Alternatively, the home appliance 10 (e.g., the communication control unit 122) may check whether the corresponding function control unit 601 is operating currently (e.g., a washing machine is operating currently).

. In one embodiment, the home appliance 10 (e.g., the function control unit 601) may request the home appliance 10 (e.g., the communication control unit 122) to initiate writing (e.g., storing in the storage unit 123) (S642). Having determined that an upgrade is possible, the home appliance 10 (e.g., the function control unit 601) may transmit the request to initiate writing based on the possibility of the upgrade, to the communication control unit 122.

. For example, the above-described steps (S640, S642) may involve delivering requests for a check of the writing state of software in relation to the function control unit 601 and for initiation of writing to the function control unit 601 through a protocol.

. For example, the protocol is a protocol exclusive for a check of a writing state and a request to initiate writing between the communication control unit 122 and the function control unit 601.

. In one embodiment, the home appliance 10 (e.g., the communication control unit 122) may transmit information on a state of the home appliance to the management server 30 (S644). The home appliance 10 (e.g., the communication control unit 122) may change the state of the function control unit 601 to a state in which the function control unit 601 writes software. Additionally, the home appliance 10 (e.g., the communication control unit 122) may transmit information indicating that the state of the function control unit 601 to a state in which the function control unit 601 writes state information (e.g., version information and the like) and software in relation to each of the plurality of function control units in the home appliance 10, to the management server 30.

. In one embodiment, the management server 30 may upgrade the state of the home appliance (S646). The management server 30 upgrades the information indicating that the state of the function control unit 601 to a state in which the function control unit 601 writes the state information (e.g., version information and the like) and the software received from the home appliance 10 (e.g., the communication control unit 122), to the server storage unit 330.

. In one embodiment, the home appliance 10 (e.g., the communication control unit 122) may deliver software to the home appliance 10 (e.g., the function control unit 601) (S648). Having received a request to initiate writing from the function control unit 601, the home appliance 10 (e.g., the communication control unit 122) delivers software corresponding to the function control unit 601 to a corresponding function control unit 601.

. For example, the home appliance 10 (e.g., the communication control unit 122) may store software in relation to the function control unit 132 in the storage unit 123, or store software in relation to the inter face control unit 142 in the storage unit 123. Alternatively, the home appliance 10 (e.g., the communication control unit 122) may store software in relation to the communication control unit 122 in the storage unit 123.

. In one embodiment, the home appliance 10 (e.g., the function control unit 601) may install software (S650). For example, the home appliance 10 (e.g., the function control unit 601) may rear software in relation to the function control unit 132 from the storage unit 123 and install the same in the function control unit 132, or read software in relation to the interface control unit 142 from the storage unit 123 and install the same in the interface control unit 142. Alternatively, the home appliance 10 (e.g., the function control unit 601) may rear software in relation to the communication control unit 122 from the storage unit 123 and install the same in the communication control unit 122.

. Further, in the case where the software is installed completely, the function control unit may notify the communication control unit 122 that the software is installed completely.

. In one embodiment, the above-described steps (S648, S650, S652) are performed for each software, For example, in the case where the delivery and installation of first software end, the delivery and installation of second software may be performed. Further, in the case where the delivery and installation of the second software end, the delivery and installation of third software may be performed.

. In one embodiment, the home appliance 10 (e.g., the communication control unit 122) may identify whether the entire software is upgraded completely (S652). The home appliance 10 (e.g., the communication control unit 122) may identify whether the above-described steps (S648, S650) are repeatedly performed for each function control unit 610, the delivery and installation of the software to the entire function control units are performed, and then the upgrade of the entire software is completed.

. For example, in the case where the entire software is not upgraded completely in the above step (S652), the home appliance 10 (e.g., the communication control unit 122) returns to the above step (S648), and in the case where the entire software is upgraded completely in the above step (S652), the home appliance 10 (e.g., the communication control unit 122) proceeds with the above step (S654).

. In one embodiment, the home appliance 10 (e.g., the communication control unit 122) may notify the management sever 30 that the upgrade is completed (S654). In the case where the entire software is upgraded completely, the home appliance 10 (e.g., the communication control unit 122) may transmit a notification that the upgrade is completed to the management server 30.

. In one embodiment, the home appliance 10 (e.g., the communication control unit 122) may perform a rebooting operation in the case where the upgrade is completed.

. In one embodiment, the management server 30 may notify the user terminal 20 that the upgrade is completed (S656). The management server 30 may transmit the notification that the upgrade is completed, received from the home appliance 10 (e.g., the communication control unit 122), to the user terminal 20. Additionally, the user terminal 20 may output (or display) a notification that the home appliance 10 is upgraded completely through an application.

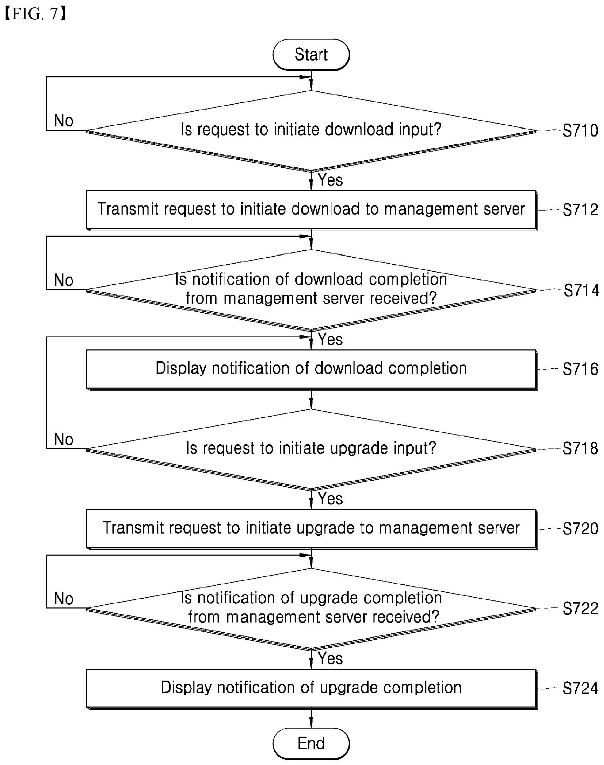

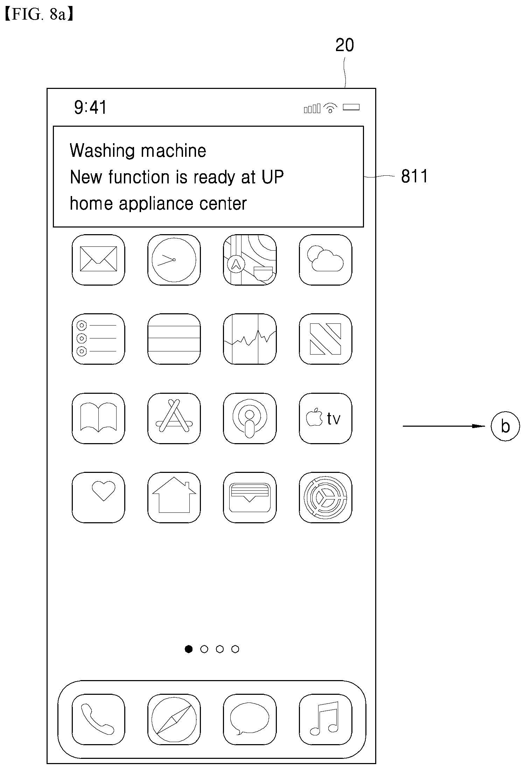

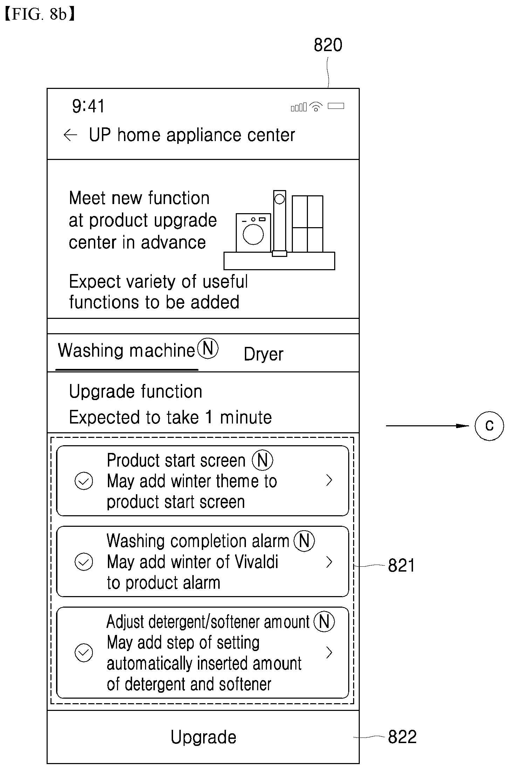

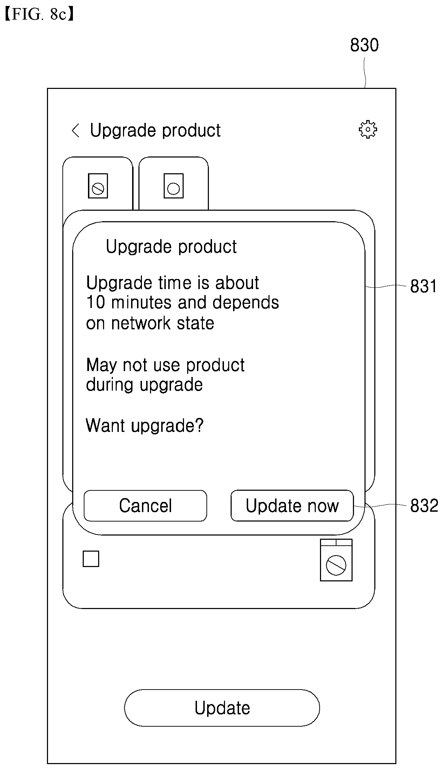

. FIG. 7 is a flowchart showing a process in which a user terminal requests an upgrade of a home appliance in one embodiment. FIG. 8(a) is an exemplary view showing that a user terminal displays a pop-up indicating that an upgrade of a home appliance is ready in one embodiment. FIG. 8(b) is an exemplary view showing a user terminal displays a screen in relation to an upgrade of a home appliance in one embodiment. FIG. 8(c) is an exemplary view showing a user terminal displays a screen receiving an input in relation to an upgrade of a home appliance in one embodiment.

. Hereinafter, the process in which a user terminal requests an upgrade of a home appliance in one embodiment is specifically described as follows, with reference to FIGS. 7 and 8.

. In one embodiment, the user terminal 20 (e.g., the terminal control unit 220) may identify whether a request to initiate a download is input (S710). The user terminal 20 (e.g., the terminal control unit 220) may identify whether an instruction for making a request to download software in relation to the home appliance 10 is received through the application (e.g., an LG ThinQ application) displayed on the terminal interface unit 230.

. Referring to FIG. 8(a), the user terminal 20 (e.g., the terminal control unit 220) may display a pop-up 811 indicating an upgrade of software in relation to at least one home appliance at home. The management server 30 may create a pop-up 811 indicating that there is software to be upgraded in the case where software to upgrade the home appliance 10 (e.g., the function control unit 601) is developed or produced, and then transmit the pop-up to the user terminal 20. Having received the pop-up in relation to each home appliance 10, the user terminal 20 (e.g., the terminal control unit 220) may display the pop-up through the application.

. Referring to FIG. 8(b), the user terminal 20 (e.g., the terminal control unit 220) may receive a user input to upgrade software (e.g., firmware) of at least one function control unit of the home appliance 10, through an application (e.g., an LG ThinQ application). For example, the application may display a screen 820 in relation to the upgrade of the home appliance.

. The screen 820 may comprise information 821 on an upgrade of at least one of a theme environment change function, a wash completion sound output function, and a detergent/softener insertion adjustment function that are performed by the function control unit 132 of the home appliance (e.g., a washing machine), and an upgrade execution menu 822.

. In one embodiment, the user terminal 20 (e.g., the terminal control unit 220) may transmit the request to initiate a download to the management server 30 (S712). Having received an instruction (i.e., a user input to request initiation of a download of software in relation to at least one function control unit 601 of the home appliance 10) input through the application, the user terminal 20 (e.g., the terminal control unit 220) may transmit the received instruction to the management server 30 (e.g., the server communication unit 310) thought the application.

. In one embodiment, the user terminal 20 (e.g., the terminal control unit 220) may identify whether a notification of download completion is received from the management server (S714). The user terminal 20 (e.g., the terminal control unit 220) may identify whether the notification transmitted from the management server 30 (e.g., the server communication unit 310) is received through the terminal communication unit 210.

. In one embodiment, the user terminal 20 (e.g., the terminal control unit 220) may display a notification of download completion (S716). The user terminal 20 (e.g., the terminal control unit 220) may display a notification transmitted from the management server 30 (e.g., the server communication unit 310), on the terminal interface unit 230, through an application (e.g., an LG ThinQ application).

. Alternatively, the user terminal 20 (e.g., the terminal control unit 220) may display information on a download rate transmitted and received from the management server 30 (e.g., the server communication unit 310), on the terminal interface unit 230, through an application (e.g., an LG ThinQ application).

. In one embodiment, the user terminal 20 (e.g., the terminal control unit 220) may identify whether a request to initiate an upgrade is input (S718). The user terminal 20 (e.g., the terminal control unit 220) may identify whether an instruction (i.e., a user input to request initiation of an upgrade of software in relation to at least one function control unit 601 of the home appliance 10) input through the application (e.g., an LG ThinQ application) is input through the terminal interface unit 230.

. Referring to FIG. 8(c), the user terminal 20 (e.g., the terminal control unit 220) may display a screen 830 comprising a pop-up 831 asking whether to upgrade software (e.g., firmware) of at least one function control unit of the home appliance 10, through an application (e.g., an LG ThinQ application). The screen 830 may comprise time taken to upgrade the function control unit 132 of the home appliance (e.g., a washing machine), cautions and an upgrade execution menu 832.

. For example, in the case where the user selects the upgrade execution menu 832, the user terminal 20 (e.g., the terminal control unit 220) may transmit a request to initiate an upgrade to the management server 30.

. In one embodiment, the user terminal 20 (e.g., the terminal control unit 220) may transmit a request to initiate an upgrade to the management server 30 (S720). In the case where an instruction (i.e., a user input to request initiation of an upgrade of software in relation to at least one function control unit 601 of the home appliance 10) input through the application (e.g., an LG ThinQ application) is received through the terminal interface unit 230, the user terminal 20 (e.g., the terminal control unit 220) may transmit the received instruction to the management server 30 (e.g., the server communication unit 310) thought the terminal communication unit 210.

. In one embodiment, the user terminal 20 (e.g., the terminal control unit 220) may identify whether a notification of upgrade completion is received from the management server 30 (S722). The user terminal 20 (e.g., the terminal control unit 220) may receive the notification as to whether entire software is upgraded completely from the management server 30 (e.g., the server communication unit 310).

. In one embodiment, the user terminal 20 (e.g., the terminal control unit 220) may display a notification of upgrade completion (S724). The user terminal 20 (e.g., the terminal control unit 220) may display the notification of upgrade completion transmitted from the management server 30 (e.g., the server communication unit 310), on the terminal interface unit 230, through the application (e.g., an LG ThinQ application).

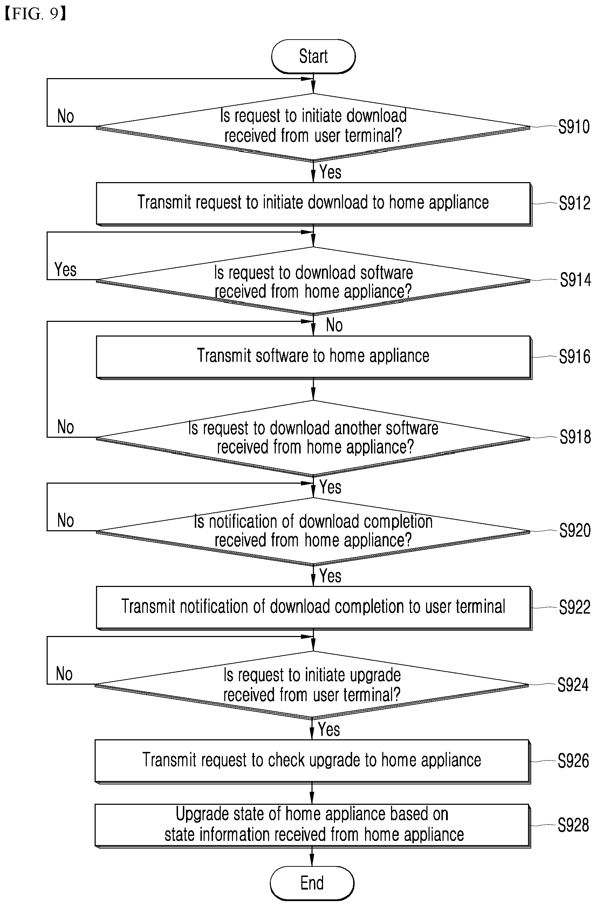

. FIG. 9 is a flowchart showing a process in which a management server upgrading a home appliance operates in one embodiment.

. Hereinafter, the process in which a management server upgrading a home appliance operates in one embodiment is specifically described as follows with reference to FIG. 9.

. In one embodiment, the management server 30 may identify whether the request to initiate a download is received from the user terminal 20 (S910). The management server 30 (e.g., the server control unit 320) may identify whether the request to initiate a download through the user terminal 20 (e.g., the terminal communication unit 210) is received through the transmission/reception module 121.

. In one embodiment, the management server 30 may transmit the request to initiate a download to the home appliance (S912). The management server 30 (e.g., the server control unit 320) may transmit the request to initiate a download received from the user terminal 20, to the home appliance 10 (e.g., the transmission/reception module 121).

. In one embodiment, the management server 30 may identify whether a request to download software is received from the home appliance (S914). The management server 30 (e.g., the server control unit 320) may identify whether a request to download software corresponding to the function control unit 601 in the home appliance 10 is received through the transmission/reception module 121.

. In one embodiment, the management server 30 may transmit software to the home appliance (S916). The management server 30 may transmit software (e.g., first software) in relation to a first function control unit (e.g., the function control unit 132) of the home appliance 10 to the home appliance 10 (e.g., the transmission/reception module 121). The management server 30 (e.g., the communication control unit 122) may transmit software more recent than current software of the function control unit 601 in the home appliance 10 to the home appliance 10 (e.g., the transmission/reception module 121).

. Additionally, the management server 30 (e.g., the server control unit 320) may receive information (e.g., a download rate) on a download rate of software, transmitted by the home appliance 10 (e.g., the communication control unit 122) through the transmission/reception module 120, through the server communication unit 310 in real time.

. In one embodiment, the management server 30 may identify whether a request to download another software is received from the home appliance (S918). The management server 30 (e.g., the server control unit 320) may identify whether a request to download second software in relation to a second function control unit (e.g., the interface control unit 142) is received from the home appliance 10 after the first software in relation to the first function control unit (e.g., the function control unit 132) is transmitted to the home appliance 10 (e.g., the transmission/reception module 121).

. For example, in the case where the request to download second software in relation to the second function control unit (e.g., the interface control unit 142) is received from the home appliance 10, the management server 30 (e.g., the server control unit 320) may return to the above step (S916) and transmit the second software to the home appliance 10.

. In one embodiment, the management server 30 may identify whether a notification of download completion is received from the home appliance (S920). For example, the management server 30 (e.g., the server control unit 320) may receive a notification that entire software is downloaded completely from the home appliance, in the case where software in relation to the entire function control units to the home appliance is transmitted completely.

. In one embodiment, the management server 30 may transmit the notification of download completion to the user terminal (S922). The management server 30 (e.g., the server control unit 320) may transmit the notification received from the home appliance 10 to the user terminal 20 (e.g., the terminal communication unit 210).

. In one embodiment, the management server 30 may identify whether a request to check an upgrade is received from the user terminal 20 (S924). The management server 30 (e.g., the server control unit 320) may receive a request to initiate an upgrade of software in relation to at least one function control unit 601 (e.g., the function control unit 132, the interface control unit 142) of the home appliance 10 from the user terminal 20.

. In one embodiment, the management server 30 may transmit the request to check an upgrade to the home appliance (S926). The management server 30 (e.g., the server control unit 320) may transmit the request to initiate an upgrade of software in relation to at least one function control unit 601, which is received from the user terminal 20, to the home appliance 10 (e.g., the transmission/reception module 121).

. In one embodiment, the management server 30 may upgrade the state of the home appliance based on state information received from the home appliance 10 (S928). The management server 30 (e.g., the server control unit 320) may upgrade state information (e.g., version information and the like) received from the home appliance 10 (e.g., the communication control unit 122) and information indicating a change to a state in which software is written to the server storage unit 330.

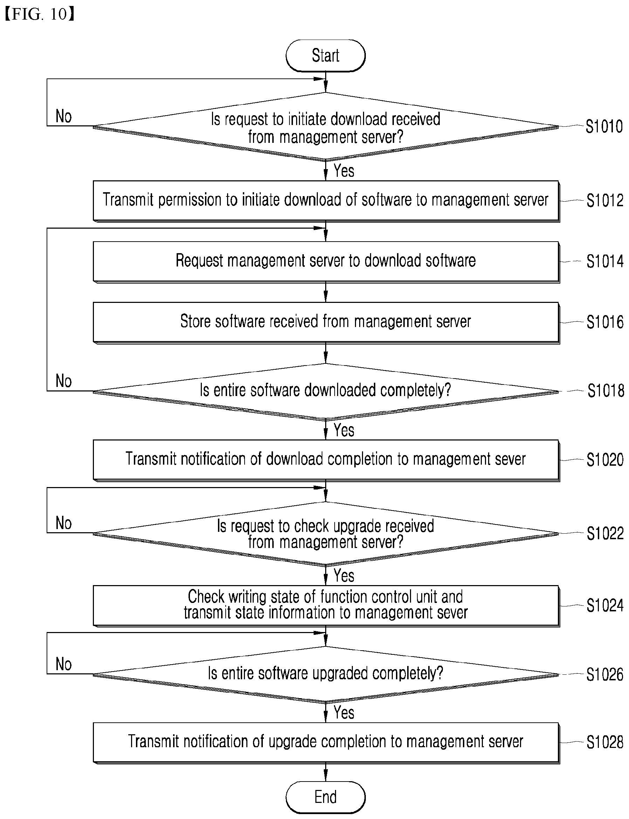

. FIG. 10 is a flowchart showing a process in which a device upgrading a home appliance operates in one embodiment.

. Hereinafter, the process in which a device upgrading a home appliance operates in one embodiment is specifically described as follows with reference to FIG. 10.

. In one embodiment, the home appliance 10 may identify whether a request to initiate a download software is received from the management server 30 (S1010). The home appliance 10 (e.g., the communication control unit 122) may receive a request to initiate a download of software in relation to at least one function control unit 601 from the management server 30 (e.g., the server communication unit 310).

. In one embodiment, the home appliance 10 may transmit permission to initiate a download of software to the management server 30 (S1012). The home appliance 10 (e.g., the communication control unit 122) may transmit a signal for permitting a download of software in relation to at least one function control unit 601 to the management server 20 (e.g., the server communication unit 301).

. In one embodiment, the home appliance 10 may request the management server 30 to download software (S1014). The home appliance 10 (e.g., the communication control unit 122) may request software for upgrading the function control unit 601 in the home appliance 10 from the management server 30 (e.g., the server communication unit 310).

. For example, the home appliance 10 (e.g., the communication control unit 122) may transmit a request comprising information (e.g., firmware version information) on the function control unit 601 in the home appliance 10 to the management server 30 (e.g., the server communication unit 310).

. In one embodiment, the home appliance 10 may store software received from the management server 30 (S1016). The home appliance 10 (e.g., the communication control unit 122) may receive software (e.g., software more recent than current software of the function control unit 601) received from the management server 30 (e.g., the server communication unit 310), and store the received software in the storage unit 123.

. For example, in the case where a seamless reception of software transmitted by the management server 30 fails temporarily due to an unstable communication channel, the home appliance 10 (e.g., the communication control unit 122) identifies the sequence of the frame of software received most recently, and then transmits the identified sequence to the management server 30.

. Additionally, the home appliance 10 (e.g., the communication control unit 122) may receive the frame of software that is transmitted by the management server 30 in a seamless manner.

. In one embodiment, the home appliance 10 may identify whether entire software is downloaded completely (S1018). The home appliance 10 (e.g., the communication control unit 122) may request transmission of software (e.g., second software) in relation to another function control unit (e.g., the interface control unit 142) in the case where software (e.g., first software) in relation to one function control unit (e.g., the function control unit 132) is received completely.

. Further, the home appliance 10 (e.g., the communication control unit 122) may receive the software (e.g., second software) in relation to another function control unit (e.g., the interface control unit 142), transmitted by the management server 30, and store the software in the storage unit 123.

. As described above, the home appliance 10 (e.g., the communication control unit 122) may receive software in relation to at least one function control unit provided therein and store the software in the storage unit 123 consecutively. Then the home appliance 10 (e.g., the communication control unit 122) may identify whether the software in relation to at least one function control unit provided in the home appliance is downloaded completely.

. In one embodiment, the home appliance 20 may transmit a notification of download completion to the management server 30 (S1020). Having identified the completion of the download of entire software in relation to at least one function control unit provided in the home appliance, the home appliance 10 (e.g., the communication control unit 122) may transmit a notification of the completion of the download of entire software to the management server 30 (e.g., the server communication unit 310).

. Additionally, in the case where entire software is downloaded completely, the home appliance 10 (e.g., the communication control unit 122) may transmit a notification of download completion respectively to at least one function control unit corresponding to software.

. In one embodiment, the home appliance 10 may identify whether a request to check an upgrade is received from the management server 30 (S1022). The home appliance 10 (e.g., the communication control unit 122) may receive a request to initiate an upgrade from the management server 30 (e.g., the server communication unit 310).

. The request may comprise an inquiry as to whether the communication control unit 122 of the home appliance 10 is upgradable. For example, the request may comprise information on an inquiry as to whether at least one function control unit of the home appliance 10 is operating currently.

. In one embodiment, the home appliance 10 may check a writing state of at least one function control unit and transmit state information to the management server 30 (S1024). The home appliance 10 (e.g., the function control unit 601) may request a writing state in relation to the function control unit 601, and the function control unit 601 may transmit a request to initiate writing based on the possibility of an upgrade. Then the home appliance 10 (e.g., the function control unit 601) may transmit state information on the home appliance 10 to the management server 30.

. In one embodiment, the home alliance 10 may identify whether entire software is upgraded completely (S1026). The home appliance 10 (e.g., the communication control unit 122) may transmit the state information on the home appliance 10 to the management server 30, and then transmit each software in relation to each function unit to the function control unit.

. For example, having received the request to initiate writing from a function control unit 601, the home appliance 10 (e.g., the communication control unit 122) may deliver software corresponding to the function control unit 601 to the function control unit 601.

. In one embodiment, the home appliance 10 may transmit a notification of upgrade completion to the management server (S1028). In the case where all software (e.g., entire software) in relation to at least one function control unit is upgraded completely, the home appliance 10 (e.g., the communication control unit 122) may transmit a notification of upgrade completion to the management server 30 (e.g., the server communication unit 310).

. The notification may comprise at least a portion of the sort of the home appliance 10, the model name of the home appliance 10, the identifier of the upgraded function control unit, the version information of the upgraded software, and the upgrade date of the upgrade software.

. In one embodiment, the home appliance 10 (e.g., the communication control unit 122 or the home appliance control unit 110) may reboot the home appliance 10 in the case where the upgrade of the home appliance 10 is complete.

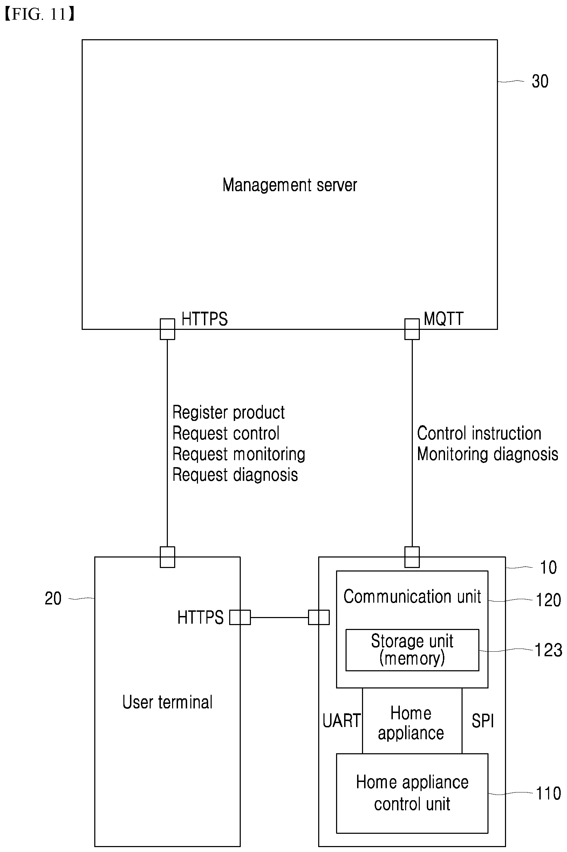

. FIG. 11 is an exemplary view showing a schematic communication state among a home appliance, a management server and a user terminal in one embodiment.

. Referring to FIG. 11, a system upgrading a home appliance may comprise a home appliance 10, a user terminal 20 and a management server 30.

. In one embodiment, the home appliance 10 may comprise a communication unit 120 comprising a modem, a storage unit 123 comprising a memory, and a home appliance control unit 110 (e.g., a micom).

. In one embodiment, the communication unit 120 and the home appliance control unit 110 may transmit and receive information and data through a universal asynchronous receiver/transmitter (UART). Alternatively, the communication unit 120 and the home appliance control unit 110 may transmit and receive information and data, based on a serial peripheral interface (SPI) method.

. In one embodiment, the home appliance 10 and the management server 30 may transmit and receive information and data, based on a message queuing telemetry transport (MQTT) method.

. In one embodiment, the management server 30 may be an upgrade server that stores upgraded software and transmits the same to the home appliance 10.

. In one embodiment, the home appliance 10 and the user terminal 20 may transmit and receive information and data, based on a hyper text transfer protocol over secure socket layer (HTTPS) method.

. In one embodiment, the user terminal 20 and the management server 30 may also transmit and receive information and data based on the HTTPS method.

. In one embodiment, the user terminal 20 may be a smart phone in which an integrated application for managing and controlling the home appliance 10 is installed. The user terminal 20 may provide an upgrade center providing upgrade management and information in relation to software data in the form of a menu on an application.

. In one embodiment, the management server 30 provides software to be upgraded to the home appliance 10.

. In one embodiment, the system upgrading a home appliance may comprise a management server 30, a user terminal 20 and at least one home appliance 10.

. Having received a request to download software in relation to each of the plurality of function control units from the home appliance 10, the management server 30 may transmit software corresponding to each of the plurality of function control units consecutively to the home appliance 10.

. Additionally, having completely received entire software in relation to each of the plurality of function control units, the home appliance 10 may transmit a notification of the download completion of the entire software to the management server 30, upgrade the plurality of function control units with the software corresponding to each of the plurality of function control units to upgrade each of the plurality of function control units of the home appliance 10, and in the case where the upgrade is completed, transmit a notification of upgrade completion to the management server 30.

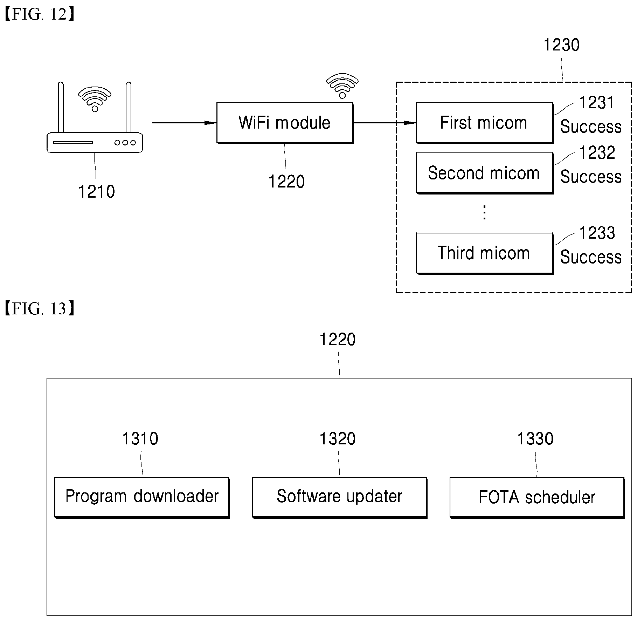

. FIG. 12 is a schematic view showing a system upgrading a home appliance in one embodiment.

. Referring to FIG. 12, the system upgrading a home appliance in one embodiment may comprise a system relay 1210, a WiFi module 1220 and a function control unit 1230. For example, the WiFi module 1220 and the function control unit 1230 may be included in the home appliance 10. The WiFi module 1220 may be included in the transmission/reception module 121 of the communication unit 120. Further, the function control unit 1230 may comprise a plurality of micoms (or function control units).

. For example, the function control unit 1230 may comprise a first micom 1231, a second micom 1232 and an N^{th} micom (1233).

. In one embodiment, the WiFi module 1220 may download a plurality of software (e.g., first to N^{th} software) consecutively. Additionally, the communication unit 120 (e.g., the communication control unit 122) may store the plurality of software (e.g., first to N^{th} software) downloaded consecutively in the storage unit 123.

. In one embodiment, the communication unit 120 (e.g., the communication control unit 122) may upgrade software in relation to each of the plurality of micoms included in the function control unit 1230. For example, the communication unit 120 (e.g., the communication control unit 122) may upgrade first software to the first micom 1231, and then check whether the first software is upgraded to the first micom 1231.

. In one embodiment, having checked success in the upgrade to the first micom 1231, the communication unit 120 (e.g., the communication control unit 122) may upgrade second software to the second micom 1232 and then check whether the second software is upgraded to the second micom 1232.

. The communication unit 120 (e.g., the communication control unit 122) may upgrade the software consecutively, as described above.

. In one embodiment, having checked success in the upgrade to a N-1^{th} micom, the communication unit 120 (e.g., the communication control unit 122) upgrades N^{th} software to the N^{th} micom 1233 and then checks whether the N^{th} software is upgraded to the N^{th} micom 1233.

. The communication unit 120 (e.g., the communication control unit 122) may upgrade the software in relation to each of the plurality of micoms consecutively and check whether all the micoms are upgraded completely, as described above.

. In the present disclosure, the upgrade of software in relation to each of the plurality of micoms proceeds consecutively, as described above, such that a failure in the entire upgrade is prevented while impossibility of operation of a product is prevented.

. FIG. 13 is a detailed block diagram showing a WiFi module in one embodiment.

. Referring to FIG. 13, the WiFi module 1220 may comprise a program downloader 1310, a software updater 1320, and a FOTA scheduler 1330.

. In one embodiment, the program downloader 1310 is a module onto which software is downloaded from the management server 30, and has a continuous downloading function. The program downloader 1310 may request transmission of a following frame, by identifying the sequence number in relation to the frame of software received despite an unstable network environment.

. In one embodiment, the software updater 1320 is a module that writes software to a micom, and writes N numbers of software (e.g., micom software) without rebooting.

. In one embodiment, the FOTA scheduler 1330 may check version information for FOTA linkage, and transmit download and upgrade information to the server 30 and receive the same from the server 30.

. As described above, the home appliance 10 may download software in relation to each of the plurality of function control units, which is provided in the home appliance, consecutively from the management server 30, and then upgrade the software in relation to each of the plurality of function control units to a corresponding function control unit, such that a seamless transmission and upgrade of the software is performed.

. Each of the steps in each of the flowcharts, described above, may be performed regardless of the order illustrated in the flowcharts, or performed at the same time. Further, in the present disclosure, at least one of the components, and at least one of the operations performed by at least one of the components can be embodied as hardware and/or software.

. The embodiments are described above with reference to a number of illustrative embodiments thereof. However, embodiments are not limited to the embodiments and drawings set forth herein, and numerous other modifications and embodiments can be drawn by one skilled in the art within the technical scope of the disclosure. Further, the effects and predictable effects based on the configurations in the disclosure are to be included within the range of the disclosure though not explicitly described in the description of the embodiment.

## Claims

1. A device upgrading a home appliance, comprising:
a communication unit configured to communicate with a server; and
a plurality of function control units configured to respectively control functions of the home appliance,
wherein the communication unit comprises a storage unit configured to continuously download a plurality of software received from the server, and store the plurality of software, and
the communication unit comprises a control unit configured to consecutively upgrade the plurality of function control units with software corresponding to each of the plurality of function control units and upgrade the home appliance, in a case where the plurality of software in relation to each of the plurality of function control units is stored completely.

2. The device of claim 1, wherein the control unit requests software corresponding to each of the plurality of function control units from the server, and in response to the request, receives the plurality of software from the server through the communication unit.

3. The device of claim 1, wherein the control unit identifies the plurality of function control units, and
the control unit requests the server to consecutively transmit software in relation to each of the plurality of function control units identified.

4. The device of claim 3, wherein having consecutively received software in relation to each of the plurality of function control units identified, the control unit consecutively upgrades software corresponding to each of the plurality of function control units with the software, and
in a case where the software in relation to each of the plurality of function control units are upgraded consecutively, and the plurality of function control units is upgraded completely, the control unit transmits a notification of upgrade completion in relation to the plurality of function control units to the server.

5. The device of claim 1, wherein the control unit requests first software in relation to a first function control unit among the plurality of function control units from the server, and in response to the request, receives the first software,
having received the first software, the control unit requests second software in relation to a second function control unit among the plurality of function control units from the server, and
the control unit receives the second software in response to the request.

6. The device of claim 5, wherein the control unit upgrades the first function control unit with the first software, and
in a case where the first software is upgraded, the control unit upgrades the second function control unit with the second software.

7. The device of claim 5, wherein in a case where the first software is being downloaded, the control unit transmits information on a download rate in relation to the first software to at least one of the server or the first function control unit, and
in a case where the second software is being downloaded, the control unit transmits information on a download rate in relation to the second software to at least one of the server or. the second function control unit.

8. The device of claim 1, wherein the control unit reboots the home appliance in a case where the home appliance is upgraded completely.

9. A method for upgrading software of a home appliance, comprising:
downloading a plurality of software for a plurality of function control units included in a home appliance from a server and storing the plurality of software in a storage unit;
identifying whether the plurality of software in relation to each of the plurality of function control units is all stored completely; and
consecutively upgrading the plurality of function control units consecutively with software corresponding to each of the plurality of function control units, and upgrading the home appliance.

10. The method of claim 9, the step of storing the plurality of software in a storage unit comprising:
requesting software corresponding to each of the plurality of function control units from the server; and
in response to the request, receiving the plurality of software from the server.

11. The method of claim 10, the step of requesting software from the server, comprising:
identifying the plurality of function control units; and
requesting the server to consecutively transmit software in relation to each of the plurality of function control units identified.

12. The method of claim 11, the step of upgrading the home appliance, comprising:
identifying whether software in relation to each of the plurality of function control units identified is received consecutively and completely;
in a case where the identification is completed, consecutively upgrading the plurality of function control units with software corresponding to each of the plurality of function control units;
identifying whether software in relation to each of the plurality of function control units identified is upgraded consecutively; and
in a case where the plurality of function control units is upgrade completely, transmitting a notification of upgrade completion of the plurality of the function control units to the server.

13. The method of claim 9, wherein the method further comprises rebooting the home appliance in a case where the home appliance is upgraded completely.

14. A server providing software of at least one home appliance, comprising:
a communication unit configured to communicate with a user terminal and the at least one home appliance;
a memory configured to store software upgrading the at least one home appliance; and
a control unit,
wherein a request to initiate a download of software of the home appliance from the user terminal is received, the control unit transmits the request to the home appliance through the communication unit,
in response to the transmission of the request, a request to download software in relation to each of the plurality of function control units of the home appliance from the home appliance is received, the control unit consecutively transmits software corresponding to each of the plurality of function control units to the home appliance, and
the transmission of the software corresponding to each of the plurality of function control units is completed and a notification of download completion of entire software from the home appliance is received, the control unit transmits the notification of download completion of entire software to the user terminal.

15. The server of claim 14, wherein if a request for first software in relation to a first function control unit among the plurality of function control units is received, the control unit transmits the first software stored in the memory to the home appliance, and
a request for second software in relation to a second function control unit among the plurality of function control units after the transmission of the first software is completed is received, the control unit transmits the second software stored in the memory to the home appliance.

16. The server of claim 14, wherein if a request to initiate an upgrade of the home appliance from the user terminal is received, the control unit transmits the initiation of an upgrade to the home appliance, and
based on the initiation of an upgraded transmitted, if state information from the home appliance is received, the control unit upgrades a state of the home appliance based on the state information.

17. The server of claim 14, wherein having received a notification of upgrade completion of the entire software from the home appliance, based on transmission of software corresponding to each of the plurality of function control units, the control unit transmits the notification of upgrade completion of the entire software to the user terminal.

18. A method in which a server provides software of at least one home appliance, comprising:
in a case where a request to initiate a download of software of the home appliance from a user terminal is received, transmitting the request to the home appliance;
in a case where a request to download software in relation to each of a plurality of function control units of the home appliance, from the home appliance, is received in response to the transmission of the request, transmitting the software corresponding to each of the plurality of function control units to the home appliance consecutively; and
in a case where the software corresponding to each of the plurality of function control units is transmitted completely, and a notification of download completion of entire software from the home appliance is received, transmitting the notification of download completion of entire software to the user terminal.

19. A system upgrading a home appliance, comprising:
a server configured to transmit software corresponding to each of a plurality of function control units consecutively to the home appliance, in a case where the server receives a request to download software in relation to each of the plurality of function control units of the home appliance, from the home appliance; and
the home appliance configured to transmit a notification of download completion of entire software to the server, in a case where the entire software in relation to each of the plurality of function control units is received completely, and to transmit a notification of upgrade completion to the server, in a case where each of the plurality of function control units is upgraded with the software corresponding to each of the plurality of function control units, and each of the plurality of function control units of the home appliance is upgrade, and the upgrade is completed.

20. The system of claim 19, wherein the system further comprises a mobile terminal configured to transmit a request to initiate a download of software of the home appliance and a request to upgrade the plurality of function control units to the server,
wherein the mobile terminal displays the notification of download completion of entire software and the notification of upgrade completion of entire software that are received from the server.
